# EUROPEAN PATENT SPECIFICATION

(11) **EP 4 463 385 B1**
(45) Date of publication and mention of the grant of the patent: **11.03.2026**
(21) Application number: 23703106.7
(22) Date of filing: 13.01.2023
(51) Int. Cl.: B65B 55/14, A23B 2/05, A23B 2/40, A23B 2/708

(54) **REFRIGERATED PROCESSED FOODS OF EXTENDED DURABILITY AND METHOD FOR THE CONSERVATION THEREOF**
GEKÜHLTE VERARBEITETE NAHRUNGSMITTEL MIT VERLÄNGERTER HALTBARKEIT UND VERFAHREN ZU DEREN KONSERVIERUNG
ALIMENTS TRANSFORMÉS RÉFRIGÉRÉS À DURABILITÉ ÉTENDUE ET LEUR PROCÉDÉ DE CONSERVATION

(30) Priority: 13.01.2022 BE 202205016; 13.01.2022 BE 202205017
(43) Date of publication of application: 20.11.2024
(73) Proprietor: COROOS International N.V., Willemstad (CW)
(72) Inventor: TIMMERMANS, Daniël Theodoor Aernout, 5482 LX Schijndel (NL)
(74) Representative: De Clercq & Partners
(86) International application number: PCT/IB2023/050318
(87) International publication number: WO 2023/135567

(56) References cited:
- WO-A1-2009/066022
- US-A1- 2014 322 403
- MOSSEL D A A ET AL: "Public health implication of refrigerated pasteurized ('sous-vide') foods", INTERNATIONAL JOURNAL OF FOOD MICROBIOLOGY, ELSEVIER BV, NL, vol. 13, no. 3, 1 July 1991 (1991-07-01), pages 187 - 206, XP023697577, ISSN: 0168-1605, [retrieved on 19910701], DOI: 10.1016/0168-1605(91)90003-8
- RYANG J.H. ET AL: "Inactivation of Bacillus cereus spores in a tsuyu sauce using continuous ohmic heating with five sequential elbow-type electrodes", vol. 120, no. 1, 1 January 2016 (2016-01-01), GB, pages 175 - 184, XP055951254, ISSN: 1364-5072, Retrieved from the Internet <URL:https://api.wiley.com/onlinelibrary/tdm/v1/articles/10.1111%2Fjam.12982> DOI: 10.1111/jam.12982
- RYANG J.H. ET AL: "Destruction of Bacillus cereus spores in a thick soy bean paste ( doenjang ) by continuous ohmic heating with five sequential electrodes", vol. 63, no. 1, 1 July 2016 (2016-07-01), GB, pages 66 - 73, XP055951252, ISSN: 0266-8254, Retrieved from the Internet <URL:https://api.wiley.com/onlinelibrary/tdm/v1/articles/10.1111%2Flam.12588> DOI: 10.1111/lam.12588
- DAELMAN JEFF ET AL: "Microbial safety and quality of various types of cooked chilled foods", FOOD CONTROL, vol. 30, no. 2, 1 April 2013 (2013-04-01), GB, pages 510 - 517, XP093041738, ISSN: 0956-7135, DOI: 10.1016/j.foodcont.2012.07.049
- DEL TORRE M ET AL: "Prevalence and behaviour of Bacillus cereus in a REPFED of Italian origin", INTERNATIONAL JOURNAL OF FOOD MICROBIOLOGY, ELSEVIER BV, NL, vol. 63, no. 3, 15 February 2001 (2001-02-15), pages 199 - 207, XP027287715, ISSN: 0168-1605, [retrieved on 20010215]

## Description

The present invention relates to fresh foods, also known as "Refrigerated Processed Foods of Extended Durability" and method for preserving fresh foods stored in refrigerators.

Various methods for preserving fresh foods to extend the storage life are known.

Fresh foods are understood to include refrigerated meals, also known as "Refrigerated Processed Foods of Extended Durability (REPFED)" produced on an industrial scale. The term REPFEDs is a generally known term in scientific literature. Fresh foods and REPFEDs can be considered as synonyms here.

In the scientific article "Incidence, diversity and characteristics of spores of psychrotolerant spore formers in various REPFEDs produced in Belgium", published in 2014 by S. Samapundo et al., the known problem relating to microorganism and spores thereof in REPFEDs is disclosed. The microbiological storage life of REFPEDs is determined by European legislation whereby for certain microorganisms legal standards have been determined for their presence and quantity.

European legislation states that:
It is generally accepted that Bacillus cereus-concentrations in excess of 10⁵ CFU/g (spores or cells) are unacceptable (Langeveld et al., 1996). Partly due to assessments of outbreaks and studies with volunteers in animals and human subjects indicating that 10⁵ CFU/g can cause food poisoning and partially because such increased B. cereus numbers do not comply with the principles of good production and hygiene practices (GMP/GHP) (Notermans et al., 1997; Lund et al., 2000). In this study it was therefore accepted that every product containing more than 10⁵ CFU/g is a risk for human health. However, a distinction was made between cells and spores. If the product contains 10⁵ spores/g at any time during production (before pasteurisation), and if said concentration is reduced to less than 105 spores/g by pasteurisation, there is no risk (subject to sufficient storage temperatures). However, if said concentration of 10⁵ spores/g is present in the final product (i.e. during the storage life), there is a risk. Spores can pass through the stomach better than vegetative cells; they can subsequently germinate, colonise the intestines and produce enterotoxins. For cells the situation is different, if a product contains 10⁵ cells/g at any stage during production or storage life, production of the degradation toxin is possible. And as said toxin is heat resistant, it will still be present after pasteurisation (Rajkovic et al., 2008). In short: 10⁵ spores/g during production (before the product reaches the market) is not considered a risk. However, the end product (on the market) is considered a risk. In addition, 10⁵ vegetative cells/g are considered a risk at every stage (production or distribution) due to the possibility of production of degradation toxins.

The exact storage life of REPFEDs is determined by the standard of approximately 100,000 colony-forming units of pathogens, including *Listeria monocytogenes, faecal streptococci* and/or *Psychrotrophic non-proteolytic Clostridium Botulinum.*

In addition to the aforementioned pathogens, it is generally known that spores of *Bacillus cereus* frequently occur in REPFEDs and form a risk for the health of consumers of such REFPEDs. More specifically, more and more Psychrotrophic strains of Bacillus *cereus* can be found in REPFEDs. Such Psychrotrophic strains of *Bacillus cereus* are able to grow at temperatures above 6°C, and thus also in a refrigerator. The optimum growth temperature of Psychrotrophic strains of *Bacillus cereus* and their spores is located between 30 °C and 37 °C. In addition, Psychrotrophic strains of *Bacillus cereus* and their spores are able to grow at a pH value between 4.9 and 9.0, whereby the optimum pH value is located between 6.0 and 7.0.

When the spores of the *Bacillus cereus* grow out into the bacteria itself, the *Bacillus cereus* can cause food infections and/or food poisoning in the consumers.

A number of methods are listed below which are used to preserve the aforementioned REPFEDs.

The known preservation methods are based on mild heat treatments that are applied in the production of REPFEDs and serve to inactivate the vegetative bacteria of the REPFEDs.

Typically, in the food industry foods with a pH value above 4.5 are sterilised. During said process the fresh foods are intensively heated and vegetative microorganisms and spores thereof will be killed. Sterilisation is at approx. 121.1 °C and ultra-high temperature sterilisation (UHT-sterilisation) is sterilisation by shortly (a number of seconds) heating at approximately 140 °C. Such foods are usually packaged in tins and saved at room temperature, whereby they have a very long storage life. However, the quality of said foods is strongly reduced and many foods are unsuitable for sterilisation.

On the other hand, pasteurisation for foods with a pH value of maximum 4.5, whereby foods are shortly heated, is known. Pasteurising is a process in the food industry whereby vegetative bacteria in foods are killed by heating the food shortly, without changing the food too much molecularly and structurally. To foods with a pH value higher than 4.5 and which cannot be sterilised, an additive is added first to bring down the pH value. Such additive can be an acid. One such example is hummus. The pH value of chickpeas is higher than 4.5. In practice the pH value is lowered under 4.5 by adding mayonnaise and/or lemon juice to the chickpeas such that the hummus can be pasteurised.

It is known that spores survive the pasteurisation process. In products with a pH >4.5 in refrigerators they can grow out vegetatively into bacteria again which in turn can multiply. Consequently, REPFEDs have a limited storage life in refrigerators.

Three pasteurisation techniques exist, whereby each time a different storage life of the foods is obtained.

In a first pasteurisation technique, the foods are packaged and subsequently pasteurised in their packaging for at least 10 minutes at 90°C. The pasteurised foods are then free of *Listeria monocytogenes, faecal streptococci* and/or *Psychrotrophic non-proteolytic Clostridium Botulinum.*

A disadvantage of said pasteurisation technique is that spores of, among others, the *Bacillus* cereus and *Clostridium Botulinum* and other spore-forming bacteria are able to survive, but typically their growth in refrigerators is more limited than without said pasteurisation.

An additional disadvantage is that the quality of the foods is considerably lower due to the long-term period whereby the foods are pasteurised at a relatively high temperature.

During a second pasteurisation technique the foods are also packaged and subsequently pasteurised in their packaging for at least two minutes at 70°C.

Said pasteurisation technique is less intensive and is intended to obtain a 6D *Listeria monocytogenes.* The other pathogens can survive said treatment. The spores of, among others, the *Bacillus cereus* and *Clostridium Botulinum* and other spore-forming bacteria also survive said treatment.

A disadvantage of the second pasteurisation technique is that different pathogens and spores thereof survive the treatment such that the storage life of the pasteurised foods is limited to a number of days in refrigerators.

Refrigerated is understood to mean here that the pasteurised foods are stored between 0°C and 10°C.

Finally, there is another third pasteurisation technique whereby foods are packaged after their pasteurisation.

In said pasteurisation, the foods can be pasteurised for at least ten minutes at 90°C or for at least two minutes at 70°C, whereby the foods are packaged or repackaged after the pasteurisation (also known as open pasteurisation).

There is a huge risk here of contamination of the foods with *Listeria monocytogenes* and/or other pathogens after the pasteurisation.

Such pasteurised foods thus contain a very short storage life of a number of days in refrigerators.

After pasteurising or sterilising the foods, the foods can be stored longer than without said treatment.

When preserving different foods, preservatives, such as acids (i.e. potassium sorbate, benzoic acid etc), are therefore often added for an extra extension of the storage life.

In addition, it is known that a group of Psychrotrophic bacteria among the aforementioned bacteria, such as Psychrotrophic strains of *Bacillus cereus,* exist that are very resistant to heat. Said bacteria can also survive and grow out after the aforementioned pasteurisation techniques. The survival and growth of said pathogenic bacteria forms a health risk in industrially produced and pasteurised refrigerated meals, also known as REPFED.

The aforementioned pasteurisation techniques are unsuitable to safeguard REPFEDs from Psychrotrophic strains of *Bacillus cereus* and/or spores thereof. The temperatures whereby REPFEDs are pasteurised or preserved are too low and too short to be able to kill Psychrotrophic strains of Bacillus cereus and/or spores thereof and/or to fatally injure the spores such that they can no longer grow out.

The purpose of the present invention is to provide a solution to at least one of the aforementioned and other disadvantages.

To this end the invention aims at Refrigerated Processed Foods of Extended Durability (REPFED) with a pH value of at least 4.6 and whereby the REPFED at a temperature between 0 °C and 10 °C is free of vegetative *Listeria monocytogenes* and *faecal streptococci* and *Clostridium Botulinum and Bacillus* cereus which are killed and whereby the spores of said bacteria are at least fatally injured such that the spores can no longer grow out vegetatively into the relevant bacteria.

An advantage of this is that REPFEDs in refrigerators and with a pH value of at least 4.6, more preferably 4.6 to 7.0 and most preferably 4.6 to 6.0 have a much longer storage life, while retaining or only minimally reducing the quality of the REPFEDs. The storage life of said REPFEDs can increase from a number of weeks to a number of months. Even better, the storage life of REFPEDs is not determined by decay of REFPEDs due to bacteria but by the organoleptic properties of the REFPEDs.

Yet another advantage of said REPFEDs is that they are microbiologically commercially sterile in refrigerators relative to vegetative Psychrotrophic *Bacillus cereus* and also their spores, whereby the spores are at least fatally injured.

Commercial sterility is understood to mean here "the condition achieved by application of heat which renders food free of viable forms of microorganisms having public health significance, as well as microorganisms not of health significance capable of reproducing in the food under normal non-refrigerated conditions of storage and distribution". (Source: British Ministry of Public health, 1994)
An advantage of this is that the spores of *Bacillus cereus* are killed and/or damaged such that in REPFEDs at a pH value between 4.6 and 7.0 in refrigerators said spores can no longer vegetatively grow out intc *Bacillus cereus.*

In addition, the invention relates to a method for preserving the aforementioned fresh foods that are stored in refrigerators, whereby the method at least comprises the following steps:
a) preheating the foods to be preserved;
b) heating the foods to be preserved at 110 °C to 115 °C for at least 10 to 60 seconds;
c) cooling the heated foods to between 0 °C and 10 °C;
d) aseptic or ultra clean or clean packaging of the foods in a sealable packaging at an oxygen percentage of less than one per cent;
whereby the steps c and d can also be executed in reverse order.

This method is a new and inventive preservation method that can also be referred to as oostromising.

Fresh foods are understood to mean foodstuffs, more specifically ready-made meals, also referred to as "Refrigerated Processed Foods of Extended Durability (REPFED) " .

The advantages of this method are disclosed below.

An advantage of this is that the storage life of the foods is increased from between 7 and 11 days to 90 days at maximum 10 °C.

An additional advantage is that the method does not use preservatives for preserving the aforementioned foods.

Another advantage is that by preheating the foods, the temperature of different components of the foods is the same or practically the same before they are heated to 110 °C to 115 °C.

Consequently a difference in temperature between different aggregation conditions of the foods is prevented.

The method according to the invention not only kills and/or inactivates *Listeria monocytogenes, faecal streptococci* and ***Psychrotrophic non-proteolytic** Clostridium Botulinum* but also the spores of the Psychrotrophic *Bacillus cereus.*

The Psychrotrophic microorganisms and/or spores of the *Bacillus cereus* are more heat resistant than *Listeria monocytogenes, faecal streptococci* and/or Psychrotrophic *non-proteolytic Clostridium Botulinum,* such that they are also killed. The spores of the aforementioned bacteria can either be killed or fatally injured such that they can no longer grow out vegetatively into bacteria in REPFEDs in refrigerators.

An advantage of this is that the spores of the *Bacillus cereus* are killed and/or damaged such that in REPFEDs at a pH value between 4.6 and 7.0 in refrigerators they can no longer vegetatively grow out intc *Bacillus cereus.*

An additional advantage is that there is no significant decline of the quality of the preserved REPFEDs according to the aforementioned method.

With the intention of better showing the characteristics of the invention, a few preferred variants of a method for preserving fresh foods according to the invention are described hereinafter by way of an example, without any limiting nature, with reference to the accompanying drawings, wherein:
figure 1 schematically shows a method according to the invention;
figure 2 shows an alternative of step D from figure 1;
figures 3 and 4 show alternative methods of figure 1.

The present invention relates to Refrigerated Processed Foods of Extended Durability (REPFED). Said REPFED contains a pH value of at least 4.6 and at a temperature between 0 °C and 10 °C is free of vegetative *Listeria monocytogenes* and *faecal streptococci* and *Clostridium Botulinum and Psychrotrophic Bacillus cereus.*

The *aforementioned* REPFEDs *in refrigerators* are free of spores of the aforementioned bacteria and/or the spores thereof are fatally injured such that they can no longer grow out vegetatively into bacteria. A known term for this is "fatally injured" spores.

The REPFEDs in refrigerators are also free of vegetative Psychrotrophic *Bacillus cereus* and the spores thereof are at least fatally injured.

Preferably, REPFEDs in refrigerators contain a pH value of at least 4.6, more preferably of 4.6 to 7.0 and most preferably of 4.6 to 6.0.

An advantage of the REPFEDs as described above is that in refrigerators said REPFEDs are microbiologically commercially sterile relative to vegetative Psychrotrophic *Bacillus cereus* and also their spores.

Microbiologically commercially sterile is understood to mean here that the REPFEDs under the conditions as described above are free of vegetative *Listeria monocytogenes* and faecal *streptococci* and *Clostridium Botulinum and Psychrotrophic Bacillus cereus* and whereby their spores are at least fatally injured.

Preferably, the aforementioned REPFEDs are free of preservatives, including acids, sorbic acid and sorbate (E200-E203), benzoic acid and benzoate (E210-E219), sulphite (E221-E228), nitrite, nitrate etc.

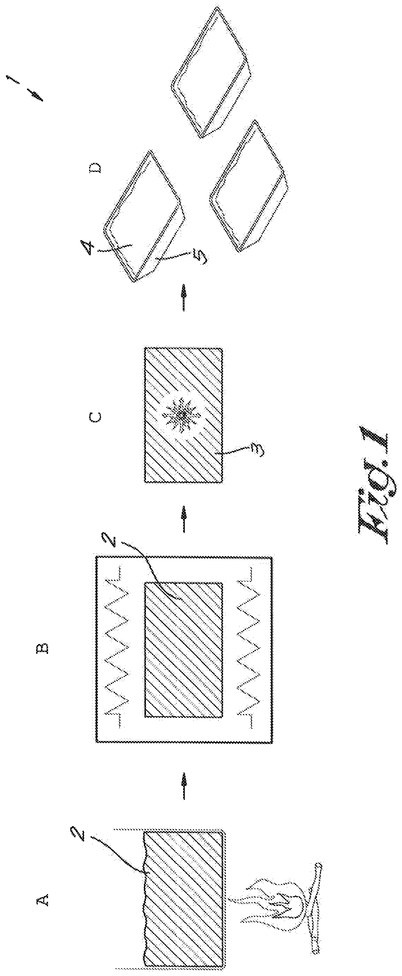

Figure 1 schematically shows a method 1 for preserving fresh foods 2 that are stored in refrigerators, to kill vegetative microorganisms and/or spores of Bacillus cereus. Fresh foods are considered to be industrial ready-made meals stored in refrigerators, also known as REPFEDs. A number of examples of this include refrigerated foods, refrigerated meals, ready-made meals, etc. It is known that said REPFEDs are microbiologically unstable and therefore can only be stored for a limited period. The method according to the invention can be used to preserve REPFEDs without addition of preservatives, whereby vegetative *Listeria monocytogenes* and *faecal streptococci* and ***Clostridium** Botulinum and Psychrotrophic Bacillus cereus* are killed and whereby the spores of said bacteria are fatally injured such that they can no longer grow out vegetatively into bacteria. An advantage of this is that the storage life of REPFEDs in refrigerators gets longer.

The *Bacillus cereus* thus includes a group of very heat resistant Bacillus cereus, more specifically the Psychrotrophic *Bacillus cereus.* After preserving REPFEDs with a pH value higher than 4.6 by means of the method mentioned below, REPFEDs in refrigerators are free of vegetative Psychrotrophic *Bacillus cereus* and their spores are either killed or fatally injured. It is known that certain strains of *Bacillus cereus* can grow at temperatures >10 °C or > 12 °C, said strains being very heat resistant. Such method 1 contains at least a number of steps, including:
a) preheating the REPFEDs 2 to be preserved;
b) heating the REPFEDs 2 to be preserved to 110 °C to 115 °C for at least 10 to 60 seconds;
c) cooling the heated REPFEDs 3 to between 0 °C and 12 °C;
d) aseptic packaging of the cooled REPFEDs 4 in a sealable packaging 5 at an oxygen percentage of less than one per cent;
whereby the steps c and d can also be executed in reverse order.

In addition, it is possible to mix the REPFEDs 2 to be preserved during and/or before the preheating of step A.

Aseptic, clean or ultra clean packaging processes D allow the aseptic or ultraclean or clean insertion and vacuum sealing of the cooled REPFEDs 4 in bags and/or cups and/or containers and/or other packaging materials and/or the like. The purpose of aseptic or clean packaging is to avoid any post-contamination. Aseptic or clean or ultra clean packaging comprises inserting and sealing in a controlled environment whereby post-contamination of REPFEDs by microorganisms and/or spores thereof can be prevented.

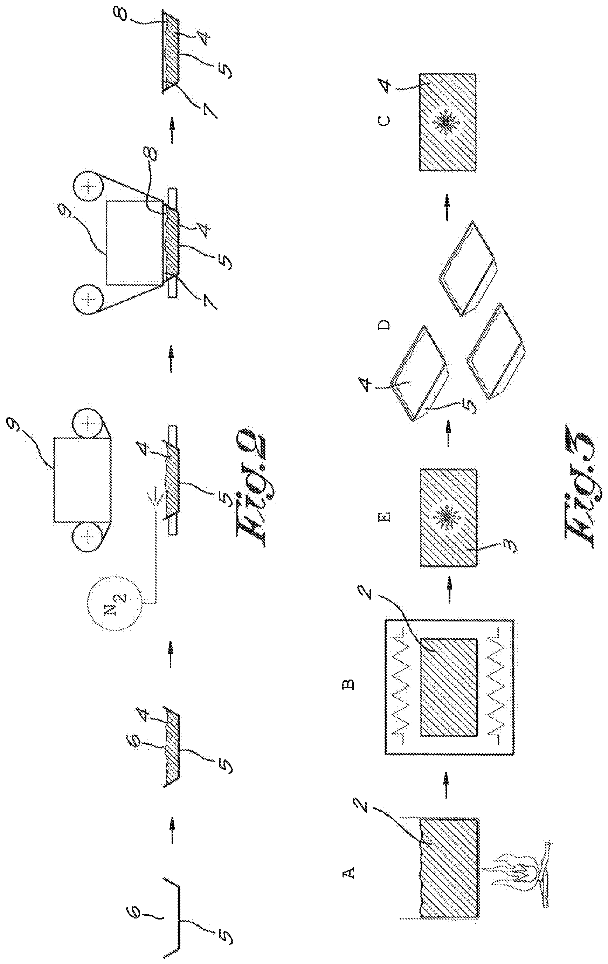

Another possibility is shown in figure 2, whereby during the aseptic packaging D of the cooled REPFEDs 4, nitrogen gas (N₂) is sprayed or blown over the cooled REPFEDs 4 to displace the air above the cooled REPFEDs 4. Nitrogen can also be sprayed in or over the REFPEDs 2 in advance to cool down the REPFEDs 2.

Thus the cooled REPFEDs 4 upon aseptic or clean or ultra clean packaging D can be applied in a sealable packaging 5, said packaging 5 being a container in the example shown, after which nitrogen gas (N₂) is blown or sprayed over the open side 6 of the container.

While blowing or spraying the nitrogen gas (N₂), a lid 7 is put over the open side 6 of the container to seal the packaging 5, whereby nitrogen gas (N₂) is caught in the space 8 between the foods 4 and the lid 7.

Preferably, the cooled REPFEDs 4 are still warm before aseptic or clean or ultra clean packaging D with nitrogen gas (N₂), whereby the cooled REPFEDs 4 quickly cool during and after packaging D thereof with nitrogen gas (N₂).

The current method allows the REPFEDs 2 to be cooled very quickly. More specifically, REPFEDs can be cooled to maximum 10 °C within a number of minutes. Thus, REPFEDs 2 can already be cooled to 10 °C or less within five minutes.

In a practical embodiment of cooled REPFEDs 4, aseptic packaging D of the foods 4 takes place in a sealable chamber 9, in which the nitrogen gas (N₂) that is blown or sprayed over the cooled REPFEDs 4 is collected such that an overpressure is created in the chamber 9. This has the advantage that packagings will not deform during cooling.

Afterwards a gas mixture of air and nitrogen gas (N₂) is present in the chamber 9.

In the event that the steps c and d of the method take place in reverse order, as shown in figure 3, it is also possible to precool E the cooled REPFEDs 4 before the aseptic packaging D thereof to a temperature between 10 °C and 12 °C.

In this case, the foods 4, after packaging D, can cool to maximum 12 and preferably 10 °C.

Preferably, the temperature of REPFEDs during packaging D thereof is less than 100 °C, more preferably at a temperature between 70 °C and 95 °C and most preferably at a temperature between 82 °C and 92 °C.

Preferably, the REPFEDs 2 to be preserved are heated B by Ohmic heating for example.

In a preferred embodiment, the REPFEDs 2 to be preserved during preheating A thereof are heated to a temperature between 40 °C and 80 °C, more preferably between 50 °C and 70 °C and most preferably between 60 °C and 65 °C.

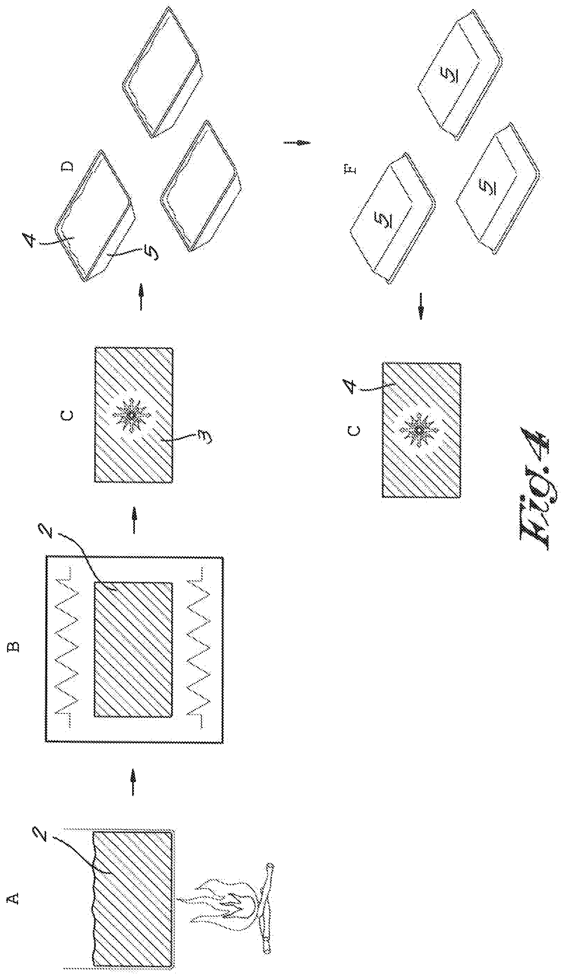

In an alternative embodiment, as shown in figure 4, the cooled REPFEDs 4 are packaged after the step of aseptic, clean or ultra clean packaging, to prevent post-contamination. Vegetative *Listeria monocytogenes* and *faecal streptococci* and *Clostridium Botulinum and Bacillus cereus* are killed and the spores of said bacteria fatally injured such that they can no longer grow out vegetatively into bacteria. D and F can also be reversed after which they can be cooled further to maximum 12 °C but preferably 10 °C.

Preferably, the method according to the invention not only kills and/or inactivates Listeria *monocytogenes, faecal streptococci* and *Psychrotrophic non-proteolytic Clostridium Botulinum* but also the spores of the psychrotrophic *Bacillus cereus* and *Listeria monocytogenes* 2 and *faecal streptococci* and *Psychrotrophic non-proteolytic Clostridium Botulinum.*

The present invention also relates to REPFEDs with the properties as described above, whereby the REFPEDs are obtained from the method as described above.

Preferably, for determining the lethality and/or the inactivation of microorganisms, the device and/or the method and/or the use as specified in BE 2022/5016 is used.

Said method and/or device and/or the use thereof allow the lethality and/or inactivation of microorganisms in the aforementioned method for preserving foods to be imitated very accurately, such that a precise determination is obtained of the lethality and/or inactivation of microorganisms in the foods. The recovery or the growth of spores can also be determined, both the time and temperature for heating, holding and cooling of REPFEDs can be simulated thereby.

## Claims

1. Method (1) for preserving "Refrigerated Processed Foods of Extended Durability (REPFED)", **characterised in that** the method at least comprises the following steps:
a) preheating the REPFEDs to be preserved (2);
b) heating the REPFEDs to be preserved to 110 °C to 115 °C for at least 10 to 60 seconds;
c) cooling the heated REPFEDs to between 0 °C and 12 °C within 5 minutes:
d) aseptic or ultra clean or clean packaging of the REPFEDs (4) in a sealable packaging (5) at an oxygen percentage of less than one per cent;
whereby the steps c and d can also be executed in reverse order.

2. Method according to claim 1, **characterised in that** during the aseptic packaging (D) of the cooled REPFEDs (4), nitrogen gas (N₂) is sprayed or blown over the cooled REPFEDs (4) to displace the air above the cooled REPFEDs (4).

3. Method according to claim 1 or 2, **characterised in that** during the aseptic packaging (D) of the cooled REPFEDs (4), nitrogen gas (N₂) is sprayed or blown over the cooled REPFEDs (4).

4. Method according to claim 3, **characterised in that** while blowing or spraying the nitrogen gas (N₂) over the cooled REPFEDs (4) a lid (7) is put over the open side (6) of the packaging (5) to seal the packaging (5), whereby nitrogen gas (N₂) is caught in the space (8) between the cooled REPFEDs (4) and the lid (7).

5. Method according to any one of the previous claims 1 to 4, **characterised in that** the REPFEDs (2) to be preserved are heated (B) by Ohmic heating.

6. Method according to any one of the previous claims 1 to 5, **characterised in that** before and/or during preheating (A) the REPFEDs (2) to be preserved, the REPFEDs (2) to be preserved are mixed.

7. Method according to any one of the previous claims 1 to 6, **characterised in that** during preheating (A) the REPFEDs (2) to be preserved, said REPFEDs (2) are heated to a temperature between 40 °C and 80 °C, more preferably between 50 °C and 70 °C and most preferably between 55 °C and 65 °C.

8. Method according to any one of the previous claims 1 to 7, **characterised in that** when the steps c and d of the method (1) occur in reverse order, the cooled REPFEDs (4) are precooled (E) before the aseptic packaging (D) thereof to a temperature between 110 °C and 12 °C, more preferably a temperature between 100 °C and 60 °C and most preferably a temperature between 83 °C and 87 °C.

9. Refrigerated Processed Foods of Extended Durability (REPFED) obtained from the method according to any one of the previous claims, **characterised in that** the REPFED contain a pH value of at least 4.6 and whereby the REPFED at a temperature between 0 °C and 10 °C is free of vegetative *Listeria monocytogenes and faecal streptococci* and *Clostridium Botulinum and Bacillus cereus* , which are killed, and
whereby the spores of said bacteria are at least fatally injured such that the spores can no longer grow out vegetatively into the relevant bacteria.

10. REPFEDs according to claim 9 **characterised in that** the REPFEDs in refrigerators contain a pH value of 4.6 to 7.0 and most preferably of 4.6 to 6.0.

11. REPFEDs according to any one of the previous claims 9 to 10, **characterised in that** REPFEDs are free of preservatives.

## Patentansprüche

1. Verfahren (1) zum Konservieren von gekühlten verarbeiteten Lebensmitteln mit verlängerer Haltbarkeit ("Refrigerated Processed Foods of Extended Durability - REPFED"), **dadurch gekennzeichnet, dass** das Verfahren zumindest die folgenden Schritte umfasst:
a) Vorwärmen der zu konservierenden REPFEDs (2);
b) Erhitzen der zu konservierenden REPFEDs auf 110 °C bis 115 °C für mindestens 10 bis 60 Sekunden;
c) Abkühlen der erhitzten REFFEDs innerhalb von 5 Minuten derart, dass sie zwischen 0 °C und 12 °C aufweisen;
d) Verpacken der REPFEDs (4) unter aseptischen oder hochreinen oder reinen Bedingungen in einer versiegelbaren Verpackung (5) bei einem Sauerstoff-Prozentanteil von weniger als einem Prozent;
wobei die Schritte c und d auch in umgekehrter Reihenfolge ausgeführt werden können.

2. Verfahren gemäß Anspruch 1, **dadurch gekennzeichnet, dass** während des Verpackens (D) der abgekühlten REPFEDs (4) unter aseptischen Bedingungen Stickstoffgas (N₂) über die abgekühlten REPFEDs (4) gesprüht oder geblasen wird, um die Luft über den abgekühlten REPFEDs (4) zu verdrängen.

3. Verfahren gemäß Anspruch 1 oder 2, **dadurch gekennzeichnet, dass** während des Verpackens (D) der abgekühlten REPFEDs (4) unter aseptischen Bedingungen Stickstoffgas (N₂) über die abgekühlten REPFEDs (4) gesprüht oder geblasen wird.

4. Verfahren gemäß Anspruch 3, **dadurch gekennzeichnet, dass** beim Blasen oder Sprühen des Stickstoffgases (N₂) über die abgekühlten REPFEDs (4) ein Deckel (7) auf die offene Seite (6) der Verpackung (5) gesetzt wird, um die Verpackung (5) zu versiegeln, sodass das Stickstoffgas (N₂) zwangsläufig in dem Raum (8) zwischen den abgekühlten REPFEDs (4) und dem Deckel (7) verbleibt.

5. Verfahren gemäß einem beliebigen der vorhergehenden Ansprüche 1 bis 4, **dadurch gekennzeichnet, dass** die zu konservierenden REPFEDs (2) durch Joulesche Wärme erhitzt (B) werden.

6. Verfahren gemäß einem beliebigen der vorhergehenden Ansprüche 1 bis 5, **dadurch gekennzeichnet, dass** die zu konservierenden REPFEDs (2) durchmischt werden, bevor die zu konservierenden REPFEDs (2) vorgewärmt (A) werden und/oder währenddessen.

7. Verfahren gemäß einem beliebigen der vorhergehenden Ansprüche 1 bis 6, **dadurch gekennzeichnet, dass** beim Vorwärmen (A) der zu konservierenden REPFEDs (2) ebendiese REPFEDs (2) auf eine Temperatur zwischen 40 °C und 80 °C, insbesondere zwischen 50 °C und 70 °C, und mit dem größten Vorzug zwischen 55 °C und 65 °C erwärmt werden.

8. Verfahren gemäß einem beliebigen der vorhergehenden Ansprüche 1 bis 7, **dadurch gekennzeichnet, dass** im Falle eines Auftretens der Schritte c und d des Verfahrens (1) in umgekehrter Reihenfolge die abgekühlten REPFEDs (4) auf eine Temperatur zwischen 110 °C und 12 °C, insbesondere eine Temperatur zwischen 100 °C und 60 °C, und mit dem größten Vorzug auf eine Temperatur zwischen 83 °C und 87 °C vorgekühlt (E) werden, bevor sie unter aseptischen Bedingungen verpackt (D) werden.

9. Gekühlte verarbeitete Lebensmittel mit verlängerter Haltbarkeit (REPFED), die ausgehend von dem Verfahren gemäß einem beliebigen der vorhergehenden Ansprüche erhalten werden, **dadurch gekennzeichnet, dass** die REPFED einen pH-Wert von mindestens 4,6 enthalten, wobei weiterhin das REPFED bei einer Temperatur zwischen 0 °C und 10 °C frei von vegetativen Listeria monocytogenes und Fäkalstreptokokken und Clostridium botulinum und Bacillus cereus ist, wobei diese abgetötet werden, und wobei die Sporen dieser Bakterien zumindest derart fatal geschädigt sind, dass die Sporen nicht mehr in der Lage sind, sich vegetativ zu den betreffenden Bakterien zu entwickeln.

10. REPFEDs gemäß Anspruch 9, **dadurch gekennzeichnet, dass** die REPFEDs in Kühlgeräten einen pH-Wert von 4,6 bis 7, 0, und mit dem größten Vorzug von 4,6 bis 6,0 enthalten.

11. REPFEDs gemäß einem beliebigen der vorhergehenden Ansprüche 9 bis 10, **dadurch gekennzeichnet, dass** die REPFEDs frei von Konservierungsstoffen sind.

## Revendications

1. Procédé (1) de conservation « d'aliments transformés réfrigérés à durabilité prolongée (REPFED) », **caractérisé en ce que** le procédé comprend au moins les étapes suivantes :
a) préchauffage des REPFED à conserver (2) ;
b) chauffage des REPFED à conserver jusqu'à une température de 110 °C à 115 °C pendant au moins 10 à 60 secondes ;
c) refroidissement des REPFED chauffés jusqu'entre 0 °C et 12 °C en 5 minutes ;
d) conditionnement aseptique ou ultra propre ou propre des REPFED (4) dans un emballage scellable (5) à un pourcentage d'oxygène inférieur à un pour cent ;
moyennant quoi, les étapes c et d peuvent également être exécutées dans un ordre inverse.

2. Procédé selon la revendication 1, **caractérisé en ce que** pendant le conditionnement aseptique (D) des REPFED refroidis (4), de l'azote gazeux (N₂) est pulvérisé ou soufflé sur les REPFED refroidis (4) pour déplacer l'air au-dessus des REPFED refroidis (4).

3. Procédé selon la revendication 1 ou 2, **caractérisé en ce que** pendant le conditionnement aseptique (D) des REPFED refroidis (4), de l'azote gazeux (N₂) est pulvérisé ou soufflé sur les REPFED refroidis (4).

4. Procédé selon la revendication 3, **caractérisé en ce que** pendant le soufflage ou la pulvérisation de l'azote gazeux (N₂) sur les REPFED refroidis (4), un couvercle (7) est placé sur le côté ouvert (6) du conditionnement (5) pour sceller le conditionnement (5), moyennant quoi l'azote gazeux (N₂) est pris dans l'espace (8) entre les REPFED refroidis (4) et le couvercle (7).

5. Procédé selon l'une quelconque des revendications précédentes 1 à 4, **caractérisé en ce que** les REPFED (2) à conserver sont chauffés (B) par chauffage ohmique.

6. Procédé selon l'une quelconque des revendications précédentes 1 à 5, **caractérisé en ce qu'**avant et/ou pendant le préchauffage (A) des REPFED (2) à conserver, les REPFED (2) à conserver sont mélangés.

7. Procédé selon l'une quelconque des revendications précédentes 1 à 6, **caractérisé en ce que** pendant le préchauffage (A) des REPFED (2) à conserver, lesdits REPFED (2) sont chauffés jusqu'à une température comprise entre 40 °C et 80 °C, plus préférablement entre 50 °C et 70 °C et le plus préférablement entre 55 °C et 65 °C.

8. Procédé selon l'une quelconque des revendications précédentes 1 à 7, **caractérisé en ce que** lorsque les étapes c et d du procédé (1) ont lieu dans l'ordre inverse, les REPFED refroidis (4) sont prérefroidis (E) avant leur conditionnement aseptique (D) jusqu'à une température comprise entre 110 °C et 12 °C, plus préférablement une température comprise entre 100 °C et 60 °C et le plus préférablement une température comprise entre 83 °C et 87 °C.

9. Aliments transformés réfrigérés à durabilité prolongée (REPFED) obtenus à partir du procédé selon l'une quelconque des revendications précédentes, **caractérisés en ce que** les REPFED contiennent une valeur de pH d'au moins 4,6 et moyennant quoi le REPFED à une température comprise entre 0 °C et 10 °C est exempt de *Listeria monocytogenes* végétative, de *streptocoques* fécaux et de *Clostridium Botulinum* et *Bacillus cereus,* qui sont tués, et
moyennant quoi les spores desdites bactéries sont au moins mortellement endommagées de sorte que les spores ne puissent plus se développer de façon végétative dans les bactéries concernées.

10. REPFED selon la revendication 9, **caractérisés en ce que** les REPFED dans des réfrigérateurs contiennent une valeur de pH de 4,6 à 7,0 et de préférence de 4,6 à 6,0.

11. REPFED selon l'une quelconque des revendications précédentes 9 à 10, **caractérisés en ce que** les REPFED sont exempts de conservateurs.
